# EUROPEAN PATENT APPLICATION

(11) **EP 2 120 071 A1**
(43) Date of publication of application: **18.11.2009**
(21) Application number: 08711413.8
(22) Date of filing: 08.02.2008
(51) Int. Cl.: G02B 5/04, G01C 3/06, G01S 7/48, G02B 5/28

(54) **LIGHT-DIVIDING ELEMENT AND DISTANCE MEASURING DEVICE**

(30) Priority: 13.02.2007 JP 2007032418
(71) Applicant: Nikon-Trimble Co., Ltd., Tokyo 144-0035 (JP)
(72) Inventor: FUKUMOTO, Satoshi, Tokyo 100-8331 (JP)
(74) Representative: Siegert, Georg
(86) International application number: PCT/JP2008/052583
(87) International publication number: WO 2008/099939

(57) **Abstract**

A light-dividing element is provided with a dichroic mirror surface 16a that reflects light with a first wavelength range and transmits light with a second wavelength range. A periphery portion of the dichroic mirror surface 16a is provided with a reflection surface 16b having high reflectance to the light with the first wavelength range, thereby capable of providing a light-dividing element capable of suppressing variation in wavelength-dividing property depending on the angle of incidence of the light, and a distance-measuring apparatus equipped therewith.

## Description

### Technical Field

The present invention relates to a light-dividing element and a distance-measuring apparatus.

### Background Art

A distance-measuring apparatus using light has been an apparatus that irradiates a target object by light, and detects reflection light or scattered light from the target object as measuring light, thereby measuring a distance to the target object.

There has been known a distance-measuring apparatus equipped with a collimation optical system for collimating a target object such that the collimation optical system, a transmission optical system for irradiating the target object with measuring light, and a receiving optical system for detecting reflect light from the target object are made to be coaxial, and light from the target object is divided into collimation light, in other words, measuring light and reflect light, in other words, reflection light by a light-dividing element that is applied a dichroic coating.

In such distance-measuring apparatus, in order to obtain natural color upon collimating a target object, in other words, in order to form naturally colored target object by the collimating optical system, it is preferable that the dichroic coating has high transmittance over wide visible light range (about 400-700 nm). For example, when light having near infrared light range (about 780-1000 nm) is used as measuring light, the dichroic coating becomes possible to have high transmittance over entire visible light range (see, for example, Japanese Patent Application Laid-Open No. 11-109022).

Moreover, there has been known a distance-measuring apparatus that red light having a wavelength of 650 nm in visible light range instead of near infrared light range is used as measuring light, and by irradiating a target object with relatively small spot light flux, collimating position can be observed on the target object.

However, a dichroic coating applied on a light-dividing element has a characteristic that wavelength range of divided light varies in accordance with the angle of incidence light on the coating surface. In particular, when an f-number of an objective lens in a receiving optical system is small, difference in angle of incidence on the dichroic coating between a ray on the center of the optical axis and a ray on the periphery becomes large, so that the above-described characteristic becomes conspicuous. Accordingly, in collimating light, since transmittance of light having long wavelength in visible light range becomes worse, the target object image colored upon collimating the target object, so that it is a problem. Furthermore, since reflect light is not properly divided from the collimating light by the dichroic coating, photodetector in the receiving optical system cannot detect with sufficient light amount.

### Disclosure of the Invention

The present invention is made in view of the aforementioned problems, and has an object to provide a light-dividing element capable of suppressing variation in wavelength-division property depending on an angle of incidence of light, and a distance measuring apparatus equipped therewith.

According to a first aspect of the present invention, there is provided a light-dividing element comprising: a dichroic mirror surface that reflects light having a first wavelength range and transmits light having a second wavelength range; wherein a periphery portion of the dichroic mirror surface is provided with a reflection mirror surface that has high reflectance to the light having a first wavelength range.

In the first aspect of the present invention, it is preferable that the reflection mirror portion has an annular shape provided to a portion or whole circumference of the dichroic mirror surface.

In the first aspect of the present invention, it is preferable that the light-dividing element is a dichroic prism, and a wavelength-dividing plane of the dichroic prism is composed of the dichroic mirror surface and the reflection mirror surface

In the first aspect of the present invention, it is preferable that the light-dividing element is a dichroic mirror, and the wavelength-dividing plane of the dichroic mirror is composed of the dichroic mirror surface and the reflection mirror surface.

In the first aspect of the present invention, it is preferable that the light in the second wavelength range is visible light.

In the first aspect of the present invention, it is preferable that the reflection mirror surface is constructed by a metallic film.

According to a second aspect of the present invention, there is provided a distance-measuring apparatus comprising: a transmission optical system that irradiates a target object with measuring light; a receiving optical system that detects reflect light from the target object; and a collimation optical system that forms collimation light from the target object in order to collimate the target object; at least the receiving optical system and the collimation optical system being a coaxial optical system that commonly uses an objective lens; the coaxial optical system including a light-dividing element that includes a dichroic mirror surface that reflects the reflect light to lead to the receiving optical system and transmits the collimation light to lead to the collimation optical system, and a periphery portion of the dichroic mirror is provided with a reflection mirror surface for leading the reflect light to the receiving optical system.

The present invention makes it possible to provide a light-dividing element capable of suppressing variation in wavelength-division property depending upon the angle of incidence of the light, and a distance-measuring apparatus equipped therewith.

### Brief Description of the Drawings

Fig. 1 is a view showing a construction of a distance-measuring apparatus with a light-dividing element according to a first embodiment of the present invention.
Fig. 2 is a graph showing spectral transmittance properties with respect to each angle of incidence of a dichroic coating applied on the light-dividing element according to each embodiment of the present invention.
Figs. 3A, 3B, 3C are views showing a shape of a reflection coating applied on the light-dividing element according to each embodiment of the present invention.
Fig. 4 is a view showing an incident light ray incident on a reflection coating portion in the dichroic prism in the distance measuring apparatus equipped with the light-dividing element according to the first embodiment of the present invention.
Fig. 5 is a view showing a construction of a distance-measuring apparatus with a light-dividing element according to a second embodiment of the present invention.

### Embodiment for Carrying out the Invention

A distance-measuring apparatus equipped with a light-dividing element according to each embodiment of the present invention is explained with reference to accompanying drawings.

### <First Embodiment>

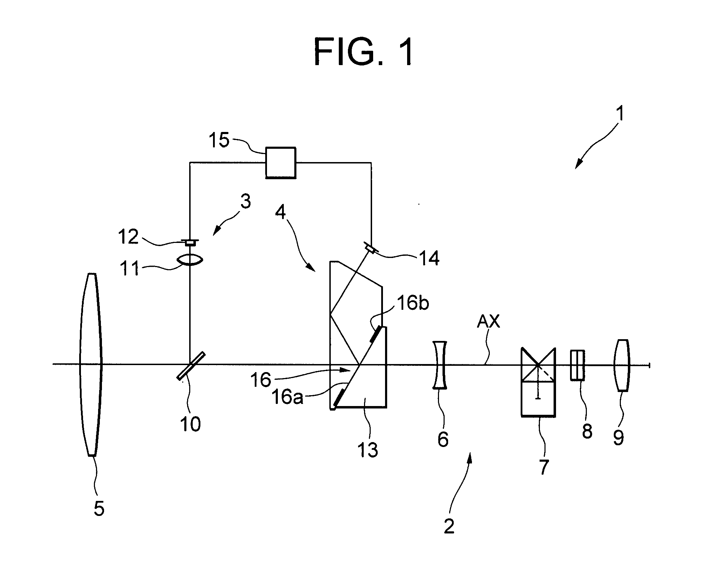

Fig. 1 is a view showing a construction of a distance-measuring apparatus with a light-dividing element according to a first embodiment of the present invention.

As shown in Fig. 1, the distance-measuring apparatus 1 is equipped with a collimator optical system 2 for imaging collimation light from a target object in order to collimate the unillustrated target object, a transmission optical system 3 for irradiating the target object with measuring light, and a receiving optical system 4 for detecting reflect light from the target object each of which is a coaxial optical system that commonly uses an objective lens 5.

In the distance-measuring apparatus 1, the collimator optical system 2 includes, in order from the unillustrated target object side, an objective lens 5, a focusing lens 6, an erecting prism 7, a reticle 8, and an eyepiece 9.

The transmission optical system 3 includes, in order from the target object side, a mirror 10 disposed between the objective lens 5 and the focusing lens 6, a collimator lens 11 disposed on the reflection optical path of the mirror 10, and a light source 12. In the present embodiment, a laser diode (LD) emanating light having wavelength about 650 nm is used as the light source 12.

The receiving optical system 4 includes a dichroic prism 13 that is disposed on the optical path between the mirror 10 and the focusing lens 6 and is explained later as a light-dividing element, and a photodetector 14 disposed in the vicinity of an exit surface of the dichroic prism 13. Incidentally, the photodetector 14 and the light source 12 in the transmission optical system 3 are connected to a calculation controller 15.

With this configuration, measuring light emitted from the light source 12, after passing through the collimator lens 11, is reflected by the mirror 10 and becomes substantially parallel light flux through the objective lens 5 to irradiate the target object. Accordingly, reflected or scattered light from the target object, in other words, reflect light passes in the periphery of the mirror 10 again through the objective lens 5. Then, the reflect light is reflected by the reflection-coating portion 16 in the dichroic prism 13, and passes through the dichroic prism 13, and is incident on the photodetector 14.

Accordingly, the calculation controller 15 calculates distance between the distance measuring apparatus 1 and the target object on the basis of the time difference between measuring light emitting timing from the light source 12 and reflect light detecting timing by the photodetector 14. In this instance, in order to increase measurement accuracy, it is ordinary procedure that an unillustrated internal optical path is provided to measure the timing. In this manner, the user can measure the distance to the target object by using the distance measuring apparatus 1. When light flux of measuring light from the light source 12 is narrowed to irradiate the target object, the measuring position on the target object can be observed by a red spot image.

Moreover, collimation light from the target object passes in the periphery of the mirror 10 through the objective lens 5, passes through the reflection-coating portion 16 in the dichroic prism 13, and passes the focusing lens 6, the erecting prism 7, and the reticle 8 in this order to be led to user's eye through the eyepiece 9. Accordingly, the user can collimate the target object image.

Then, the dichroic prism 13 that is the most characteristic feature of the present distance measuring apparatus 1 is explained in detail.

The dichroic prism 13 is a prism member constructed by a triangular prism and a trapezoidal prism that are extending in the vertical direction to the surface of the page as shown in Fig. 1 and cemented with each other. In the cemented surface, a reflection-coating portion 16 composed of a first reflection-coating 16a having an elliptical shape with a minor axis extending in a vertical direction to the surface of the paper are disposed and a second reflection coating 16b formed on the outer periphery of the first reflection coating 16a is provided.

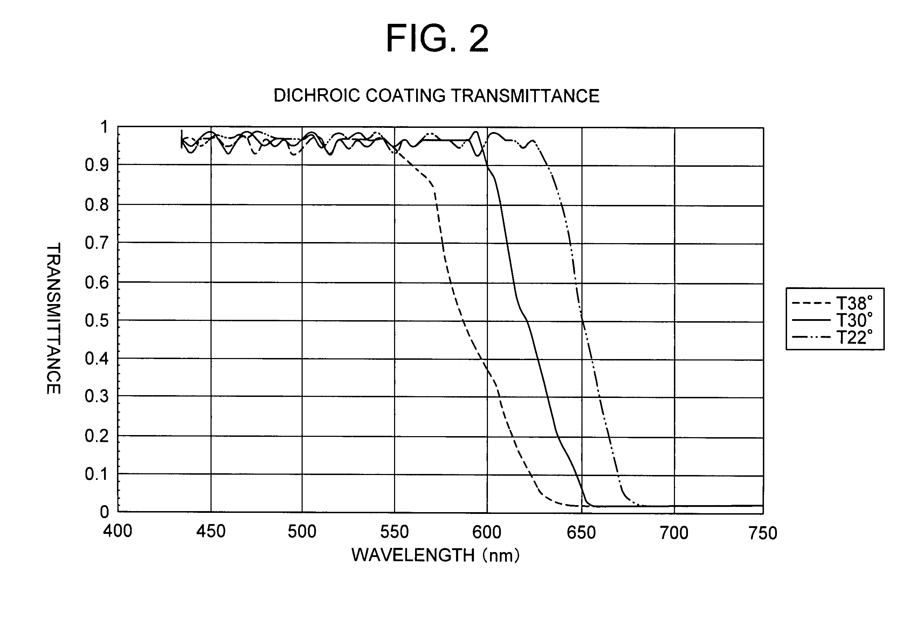

The first reflection coating 16a is a dichroic coating whose transmittance characteristic is shown in Fig. 2, transmits collimation light among the light from the target object, and reflects reflect light. As is understood from Fig. 2, when the reflect light (wavelength 650 nm) is incident on the dichroic coating 16a by the angle of incidence of 22 degrees, a portion of the light transmits the dichroic coating 16a, so that it becomes impossible to properly divide the light from the target object into reflect light and collimation light.

Accordingly, the second reflection coating 16b for properly reflecting reflect light is provided on the periphery of the first reflection coating 16a where reflectance of the reflect light is lowered.

In the present embodiment, the second reflection coating 16b composed of a metallic film coating having annular shape formed on circumference of the first reflection coating 16a as shown in Fig. 13A.

With this configuration, the reflection-coating portion 16 makes it possible to properly divide the light from the target object into the reflect light and collimation light by the first reflection-coating 16a. Moreover, the reflect light incident on the outer periphery of the first reflection-coating 16a can be properly reflected by the second reflection coating 16b.

More specifically, the dichroic prism 13 according to the present embodiment is constructed such that refractive index of the prism member is 1.569, and an angle between the reflection-coating portion 16 and the optical axis AX is 30 degrees. When the light from the target object is incident on the reflection-coating portion 16, a light flux with an f-number of 2.75 at the objective lens 5, in other words, the reflect light and collimation light are incident on the first reflection coating 16a, and a light flux with an f-number of 2.2 at the objective lens 5, in other words, the reflect light is incident on the second reflection coating 16b.

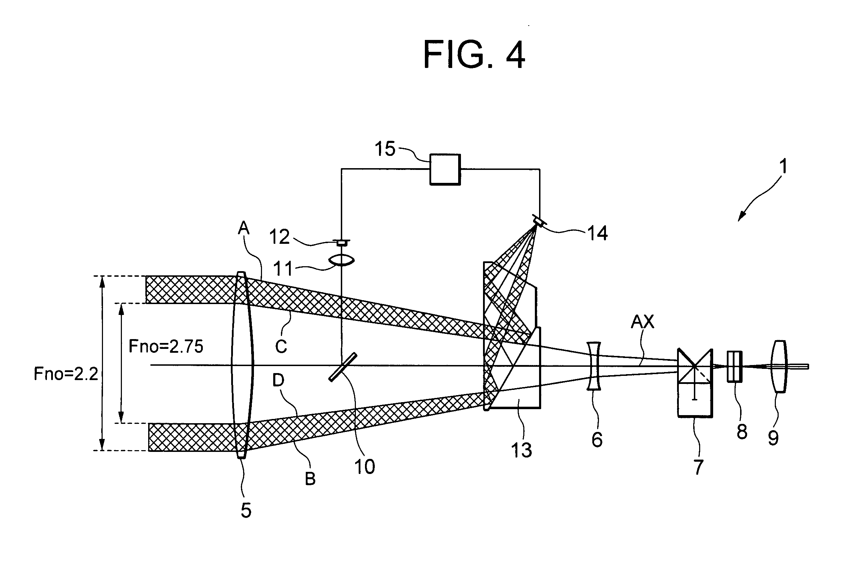

Fig. 4 is a view showing an incident light ray incident on a reflection-coating portion 16 in the dichroic prism 13 in the distance measuring apparatus equipped with the light-dividing element according to the first embodiment of the present invention.

In this condition, among the light flux with the f-number of 2.75 at the objective lens 5, an angle of incidence of the light ray C passing through the upper periphery of the objective lens 5 with respect to the first reflection coating 16a is 23.5 degrees, and that of the light ray D passing through the lower periphery with respect to the first reflection coating 16a is 36.5 degrees. Incidentally, an angle of incidence of the light ray passing along the optical axis AX with respect to the first reflection coating 16a is 30 degrees, and that of the light ray passing through the right or left end of the objective lens 5 with respect to the first reflection coating 16a is 30.63 degrees.

In this manner, with making small the difference in angles of incidence of light rays C, D and light ray passing along the optical axis AX with respect to the reflection coating 16a, it becomes possible to suppress deterioration in wavelength-division property of the first reflection coating 16a. Moreover, when the difference in angles of incidence becomes small, design of the dichroic coating film becomes easy, so that it is advantageous for reducing the number of coatings, and for manufacturing dichroic coating having better wavelength-division property.

As shown in Fig. 4, among the light flux having an f-number of 2.2 at the objective lens 5, an angle of incidence of the light ray A passing through the upper periphery of the objective lens 5 with respect to the second reflection coating 16b is 22 degrees, and that of the light ray B passing through the lower periphery of the objective lens 5 with respect to the second reflection coating 16b is 38 degrees. Incidentally, angle of incidence of the light ray passing through the left edge or right edge with respect to the second reflection coating 16b is 30.95 degrees.

Here, as described above, the second reflection coating 16b is constructed by a metallic film, since reflection property of the metallic film does not depend on the angle of incidence of the light, the light ray propagating with an angle of incidence (for example, 22 degrees) that causes deterioration in wavelength-division property to the dichroic coating 16a can be properly reflected without light loss.

The area ratio at the objective lens 5 between the light flux having an f-number of 2.75 at the objective lens 5 and the light flux having an f-number of 2.2 at the objective lens 5 is about 1 : 1.6.

As described above, in the reflection-coating portion 16 of the dichroic prism 13 according to the present embodiment, the first reflection coating 16a can excellently secure wavelength-division property of the dichroic coating regardless of the angle of incidence of the reflect light, and has a dimension capable of securing sufficient light flux of the collimation light, and the second reflection coating 16b is provided to an area where the reflect light propagates with a certain angle of incidence that deteriorates wavelength-division property of the dichroic coating.

Accordingly, in the first reflection coating 16a, the light from the target object can be properly divided into reflect light and collimation light with excellent wavelength-division property. Accordingly, the target object image formed by the collimation light can be prevented from being colored caused by transmission of a portion of reflect light from the first reflection coating 16a.

Moreover, as described above, the reflect light is properly reflected by the first reflection coating 16a, and the reflect light incident on the second reflection coating 16b can be properly reflected by the second reflection coating 16b regardless of the angle of incidence to be led to the photodetector 14. Accordingly, the photodetector 14 can detect reflect light with sufficient light amount without losing the light amount.

As described above, the present embodiment makes it possible to realize a dichroic prism capable of suppressing variation in wavelength-division property depending on angle of incidence of the light. With this configuration, since reception efficiency can be increased with suppressing coloring of collimation light, it becomes possible to realize a distance measuring apparatus advantageous to lengthen the measuring distance capable of pleasantly observing the target object with natural color.

### <Second Embodiment>

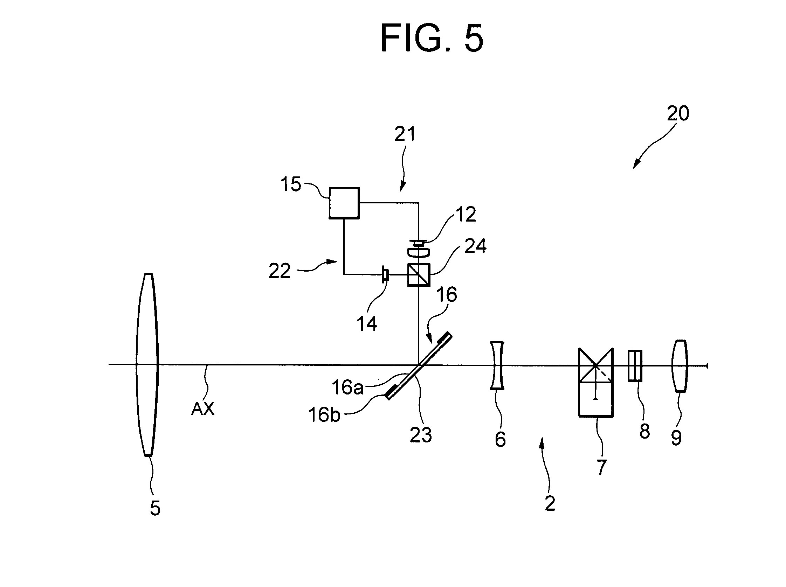

Fig. 5 is a view showing a construction of a distance measuring apparatus with a light-dividing element according to a second embodiment of the present invention.

The distance measuring apparatus equipped with a light-dividing element according to the present embodiment shows a variation of the light-dividing element according to the present invention, the same portion as the first embodiment is attached to the same symbol to omit duplicated explanations, and the different portions are explained in detail.

As shown in Fig. 5, the distance measuring apparatus 20 includes a collimation optical system 2, a transmission optical system 21, and a receiving optical system 22 each of which is a coaxial optical system commonly using the objective lens 5.

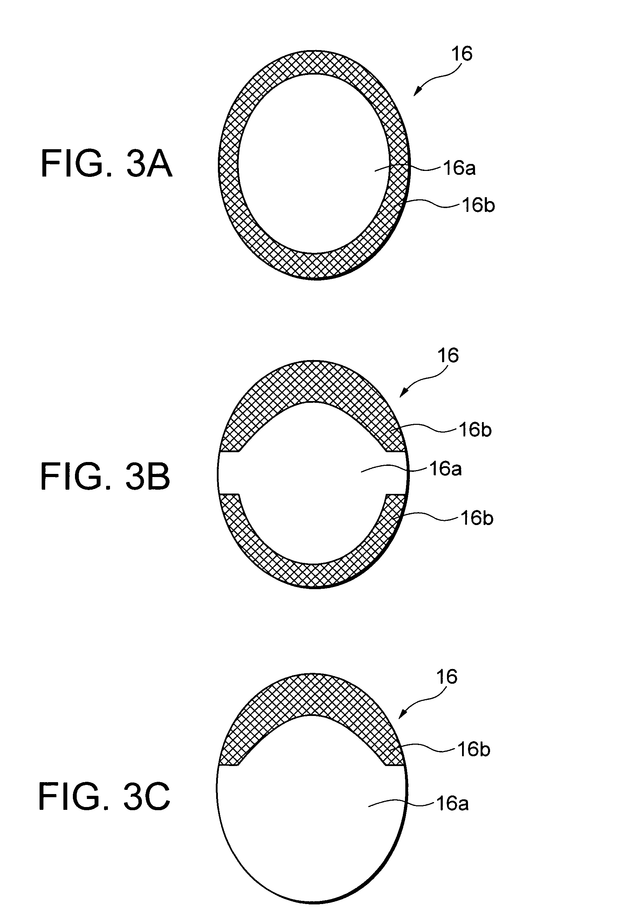

In the distance measuring apparatus 20, the transmission optical system 21 includes a dichroic mirror 23 disposed as an optical path dividing element on the optical path between the objective lens 5 and the focusing lens 6, a semi-transparent mirror 24 disposed on the reflection optical path of the dichroic mirror 23, and a light source 12. In the present embodiment, the dichroic mirror 23 has a reflection-coating portion 16 shown in Fig. 3A similar to the dichroic prism 13 according to the first embodiment, and the similar effect as the dichroic prism 13 can be performed.

Moreover, the receiving optical system 22 is an optical system that is commonly uses the dichroic mirror 23 and the semi-transparent mirror 24 with the transmission optical system 21, and includes a photodetector 14 on the reflection optical path of the semi-transparent mirror 24.

With this configuration, measuring light emitted from the light source 12 transmits the semi-transparent mirror 24, is reflected by the dichroic mirror 23, and irradiates a target object with substantially parallel light through the objective lens 5. The reflected or scattered light by the target object, in other words, reflect light is incident on the dichroic mirror 23 through the objective lens 5 again, and reflected by the reflection-coating portion 16 of the dichroic mirror 23. The reflect light is reflected by the semi-transparent mirror 24 to be incident on the photodetector 14.

Accordingly, the calculation controller 15 calculates distance between the distance measuring apparatus 20 and the target object on the basis of the time difference between measuring light emitting timing from the light source 12 and reflect light detecting timing by the photodetector 14. In this manner, the user can measure the distance to the target object by using the distance measuring apparatus 20.

As described above, similar to the first embodiment, the present embodiment makes it possible to realize a dichroic prism capable of suppressing variation in wavelength-division property depending on angle of incidence of the light. With this configuration, since reception efficiency can be increased with suppressing coloring of collimation light, it becomes possible to realize a distance measuring apparatus advantageous to lengthen the measuring distance capable of pleasantly observing the target object with natural color.

The shape of the second reflection coating 16b in the reflection-coating portion 16 of the dichroic prism 13 according to the first embodiment or the dichroic mirror 23 according to the second embodiment is not limited to the annular shape shown in Fig. 3A. Even in an area where the first reflection coating 16a is applied in each embodiment, the second reflection coating 16b may be formed within a range where the light amount of the collimation light does not cause problems. Accordingly, it becomes possible to secure further larger light amount of the reflect light to be effective to make the measuring distance longer. Specifically the following shape can be taken according to the reception efficiency and manufacturing cost of the reflect light.

Since incident angle of the light ray passing through the left or right end portion of the objective lens 5 with respect to the reflection-coating portion 16 has a small difference with the incident angle of the light ray passing along the optical axis AX with respect to the reflection-coating portion 16, wavelength-division property of the dichroic coating does not deteriorate. Accordingly, since an incident area of the reflection-coating portion 16 where the light ray passing through the left or right end portion of the objective lens 5 is incident is not necessary to provide the second reflection coating 16b, the second reflection coating 16b may have a shape that the right and left portions are cut out from the annular shape as shown in Fig. 3B.

Since deterioration in wavelength-division property is conspicuous to the light ray passing through the upper end of the objective lens 5 that shows smaller angle of incidence, the shape of the second reflection coating 16b may be only upper portion of the annular shape with wider thickness toward upper side as shown in Fig. 3C. When the shape of the reflection coating 16b is made to be such shape, manufacturing thereof becomes easy, so that it is desirable.

The dichroic prism 13 according to the first embodiment has advantageous points to the dichroic mirror 23 according to the second embodiment such that since light ray is deflected in the prism portion, variation in the angle of incidence on the reflection-coating portion 16 can be made small, and since the optical axis does not shift, it is advantageous for assembling the apparatus. On the other hand, the dichroic mirror 23 according to the second embodiment is advantageous to be easy to manufacture with respect to the dichroic prism 13 according to the first embodiment.

According to each embodiment, it becomes possible to realize a light-dividing element capable of suppressing variation in wavelength-division property depending upon the angle of incidence of the light, and a distance measuring apparatus equipped therewith.

## Claims

1. A light-dividing element comprising:
a dichroic mirror surface that reflects light having a first wavelength range and transmits light having a second wavelength range;
wherein a periphery portion of the dichroic mirror surface is provided with a reflection mirror surface that has high reflectance to the light having a first wavelength range.

2. The light-dividing element according to claim 1, wherein the reflection mirror portion has an annular shape provided to a portion or whole circumference of the dichroic mirror surface.

3. The light-dividing element according to claim 1, wherein the light-dividing element is a dichroic prism, and a wavelength-dividing plane of the dichroic prism is composed of the dichroic mirror surface and the reflection mirror surface

4. The light-dividing element according to claim 1, wherein the light-dividing element is a dichroic mirror, and the wavelength-dividing plane of the dichroic mirror is composed of the dichroic mirror surface and the reflection mirror surface.

5. The light-dividing element according to claim 1, wherein the light in the second wavelength range is visible light.

6. The light-dividing element according to claim 1, wherein the reflection mirror surface is constructed by a metallic film.

7. A distance-measuring apparatus comprising:
a transmission optical system that irradiates a target object with measuring light;
a receiving optical system that detects reflect light from the target object; and
a collimation optical system that forms collimation light from the target object in order to collimate the target object;
at least the receiving optical system and the collimation optical system being a coaxial optical system that commonly uses an objective lens;
the coaxial optical system including a light-dividing element that includes a dichroic mirror surface that reflects the reflect light to lead to the receiving optical system and transmits the collimation light to lead to the collimation optical system, and a periphery portion of the dichroic mirror is provided with a reflection mirror surface for leading the reflect light to the receiving optical system.
